# FASCICULE DE BREVET EUROPEEN

(11) **EP 4 361 429 B1**
(45) Date de publication et mention de la délivrance du brevet: **27.08.2025**
(21) Numéro de dépôt: 23205307.4
(22) Date de dépôt: 23.10.2023
(51) Int. Cl.: F02K 1/72, F02K 1/76, F02K 3/06

(54) **TURBORÉACTEUR DOUBLE FLUX COMPORTANT DES DÉFLECTEURS MOBILES ET UN SYSTÈME D'ACTIONNEMENT DES DÉFLECTEURS**
TURBOFANTRIEBWERK MIT BEWEGLICHEN ABLENKPLATTEN UND EINEM SYSTEM ZUR BETÄTIGUNG DER DEFLEKTOREN
TURBOFAN COMPRISING MOVING BAFFLES AND A BAFFLE ACTUATION SYSTEM

(30) Priorité: 24.10.2022 FR 2211005
(43) Date de publication de la demande: 01.05.2024
(73) Titulaire: AIRBUS OPERATIONS, 31060 Toulouse Cedex 9 (FR)
(72) Inventeur: BELIN, Michael, 31060 TOULOUSE (FR); SILLIERES, Lionel, 31060 TOULOUSE (FR); CAZALIS, Julie, 31060 TOULOUSE (FR); VANDERBAUWEDE, Simon, 31060 TOULOUSE (FR); MAGNE, Samuel, 31060 TOULOUSE (FR)
(74) Mandataire: Cabinet Le Guen Maillet

(56) Documents cités:
- FR-A1- 2 991 670
- US-A- 6 021 636
- US-A1- 2013 292 489

## Description

### DOMAINE TECHNIQUE

La présente invention concerne un turboréacteur double flux pour aéronef comportant un capot mobile, des déflecteurs mobiles et un système d'actionnement des déflecteurs, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux comporte une soufflante qui est à l'avant du moteur et qui entraîne l'air extérieur de l'avant vers l'arrière du turboréacteur double flux. À l'arrière de la soufflante, l'air se divise en un flux primaire qui suit une veine primaire à l'intérieur du moteur et en un flux secondaire qui suit une veine secondaire entre le moteur et la nacelle.

La nacelle comporte une structure fixe sur laquelle sont fixés la soufflante et le moteur et certains capots fixes de la nacelle. La nacelle comporte également des capots mobiles qui se déplacent sur la structure fixe entre une position avancée et une position reculée. En position reculée qui correspond à une inversion de poussée du turboréacteur double flux, une fenêtre est ouverte entre la veine secondaire et l'extérieur pour évacuer l'air de la veine secondaire. Pour guider au mieux l'air vers l'avant, des déflecteurs (également appelés « cascades ») sont fixés de manière à être positionnés en travers de la fenêtre en position reculée des capots mobiles. Les déflecteurs sont ainsi logés dans les capots mobiles, augmentant d'autant les dimensions desdits capots mobiles pour permettre de loger lesdits déflecteurs, ce qui entraîne également une augmentation des lignes aérodynamiques de la nacelle et donc une plus grande consommation de carburant. Le document FR2991670 montre un turboréacteur double flux selon l'art antérieur.

### EXPOSÉ DE L'INVENTION

Un objet de la présente invention est de proposer un turboréacteur double flux pour aéronef comportant un capot mobile, des déflecteurs mobiles et un système d'actionnement qui permet de déplacer les déflecteurs en même temps que le capot mobile et ainsi de limiter l'impact des déflecteurs sur les dimensions dudit capot mobile.

À cet effet, est proposé un turboréacteur double flux comportant un moteur avec un carter de soufflante et une nacelle entourant le moteur où une veine d'un flux secondaire est délimitée entre la nacelle et le moteur, ladite nacelle comportant :
- une structure fixe comportant un capot fixe autour du carter de soufflante et des deuxièmes moyens d'arrêt,
- un ensemble mobile qui est mobile en translation sur la structure fixe et comporte des deuxièmes moyens de blocage et un coulisseau portant un capot mobile, où l'ensemble mobile est mobile entre une position avancée dans laquelle le coulisseau est positionné de manière à ce que le capot mobile soit rapproché du carter de soufflante et du capot fixe et une position reculée dans laquelle le coulisseau est positionné de manière à ce que le capot mobile soit éloigné du carter de soufflante et du capot fixe pour définir entre eux une fenêtre ouverte entre la veine et l'extérieur de la nacelle,
- des actionneurs prévus pour assurer, à partir de la position avancée, un déplacement en translation du coulisseau jusqu'à la position reculée et inversement,
- des déflecteurs montés mobiles en translation sur la structure fixe entre une position avancée correspondant à la position avancée dans laquelle les déflecteurs sont logés entre le carter de soufflante et le capot fixe et une position reculée dans laquelle les déflecteurs sont positionnés en travers de la fenêtre, et
- au moins un système d'actionnement, chacun comportant :
- un chariot solidaire des déflecteurs,
- un levier de blocage monté articulé sur le chariot et portant des premiers moyens de blocage où le levier de blocage est mobile en rotation entre une position de blocage dans laquelle les premiers moyens de blocage sont solidaires des deuxièmes moyens de blocage et une position libre dans laquelle les premiers moyens de blocage ne sont pas solidaires des deuxièmes moyens de blocage et inversement, et
- un système de transmission prévu, d'une part, pour déplacer le levier de blocage de la position de blocage à la position libre lorsque l'ensemble mobile atteint une position de basculement entre sa position avancée et sa position reculée en partant de sa position avancée, et, d'autre part, pour déplacer le levier de blocage de la position libre à la position de blocage lorsque l'ensemble mobile atteint la position de basculement entre sa position reculée et sa position avancée en partant de sa position reculée, où lorsque l'ensemble mobile est en position de basculement, les déflecteurs sont dans leur position reculée, où le système de transmission comporte :
   - un levier d'arrêt monté articulé sur le chariot et portant des premiers moyens d'arrêt, où le levier d'arrêt est mobile en rotation entre une position d'attente dans laquelle les premiers moyens d'arrêt ne sont pas solidaires des deuxièmes moyens d'arrêt et une position d'arrêt dans laquelle les premiers moyens d'arrêt sont solidaires des deuxièmes moyens d'arrêt et inversement, et
   - un bras avec une première extrémité montée articulée avec le levier d'arrêt et une deuxième extrémité montée articulée avec le levier de blocage, où le bras est agencé de manière à ce que le basculement de la position d'attente à la position d'arrêt du levier d'arrêt corresponde au basculement de la position de blocage à la position libre du levier de blocage et de manière à ce que le basculement de la position libre à la position de blocage du levier de blocage corresponde au basculement de la position d'arrêt à la position d'attente du levier d'arrêt, où le système de transmission comporte au moins un amortisseur et où pour chaque amortisseur, une première extrémité dudit amortisseur est montée articulée au levier de blocage et une deuxième extrémité est montée articulée au levier d'arrêt.

La mise en place d'un tel système de transmission assure un encombrement minimum et un déplacement sans choc.

Avantageusement, dans la position libre, le levier de blocage vient en butée contre une première butée du bras.

Avantageusement, dans la position d'attente, le levier d'arrêt vient en butée contre une deuxième butée du bras.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur selon l'invention,
[Fig. 2] est une vue de côté et en coupe du turboréacteur selon l'invention en position avancée,
[Fig. 3] est la même vue que la Fig. 2 dans une première position intermédiaire,
[Fig. 4] est la même vue que la Fig. 2 dans une deuxième position intermédiaire,
[Fig. 5] est la même vue que la Fig. 2 en position reculée,
[Fig. 6] est une vue de côté d'un système d'actionnement selon l'invention juste avant une position de basculement, et
[Fig. 7] est une vue de côté d'un système d'actionnement selon l'invention juste après la position de basculement.

### EXPOSÉ DÉTAILLÉ DE MODES DE RÉALISATION

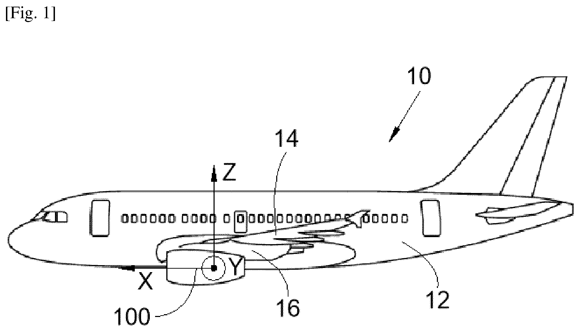

Dans la description qui suit, les termes relatifs à une position sont pris en référence à un aéronef en position d'avancement comme il est représenté sur la Fig. 1.

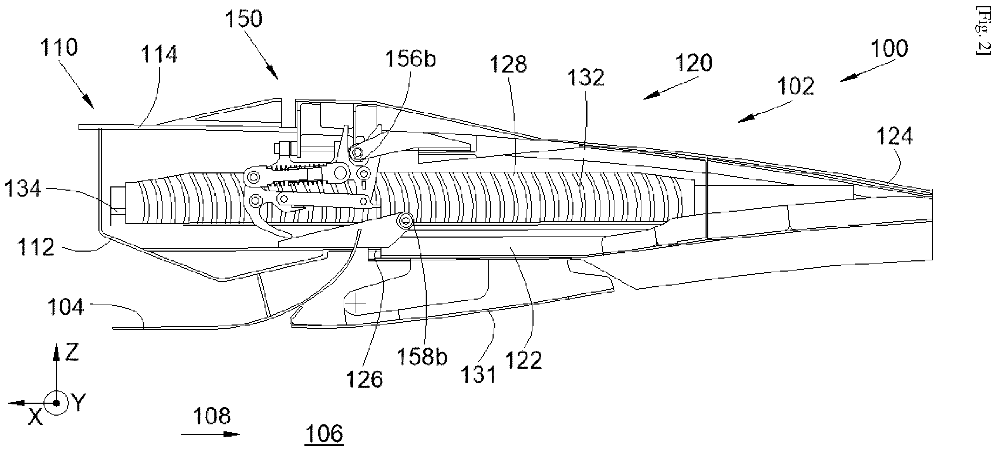

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16. La Fig. 2 montre une coupe du turboréacteur double flux 100 qui présente une nacelle 102 et un moteur qui est logé à l'intérieur de la nacelle 102 et qui comporte un carter de soufflante 104 qui entoure une soufflante montée à l'avant du moteur à l'intérieur de l'entrée d'air de la nacelle 102.

Dans la description qui suit, et par convention, on appelle X l'axe longitudinal du turboréacteur double flux 100 qui est parallèle à l'axe longitudinal de l'aéronef 10 orienté positivement dans le sens d'avancement de l'aéronef 10, on appelle Y l'axe transversal qui est horizontal lorsque l'aéronef est au sol, et Z l'axe vertical qui est vertical lorsque l'aéronef est au sol, ces trois axes X, Y et Z étant orthogonaux entre eux.

Le turboréacteur double flux 100 présente entre la nacelle 102 et le moteur et à l'arrière de la soufflante, une veine 106 dans laquelle circule le flux secondaire 108 provenant de l'entrée d'air à travers la soufflante.

La nacelle 102 présente une structure fixe 110 qui est montée fixe sur le carter de soufflante 104. La structure fixe 110 est composée ici d'un cadre avant 112 monté autour du carter de soufflante 104 et fixé à ce dernier. La structure fixe 110 comporte également un capot fixe 114 fixé autour du cadre avant 112 et du carter de soufflante 104.

La nacelle 102 présente un ensemble mobile 120 qui comporte un coulisseau 122 qui prend par exemple la forme d'un cylindre à parois ajourées et un capot mobile 124 formant les parois de la tuyère et porté par le coulisseau 122. Le capot mobile 124 est fixé ici à l'arrière du coulisseau 122.

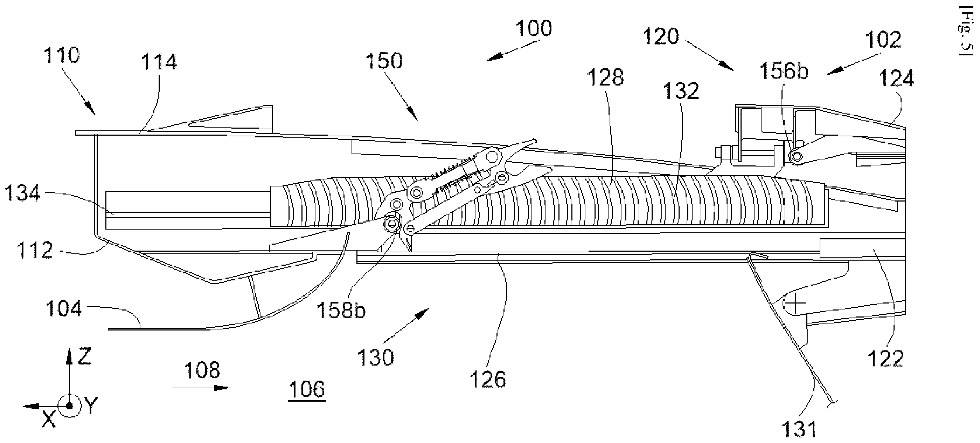

Le coulisseau 122 est monté mobile en translation selon une direction de translation globalement parallèle à l'axe longitudinal X sur la structure fixe 110 de la nacelle 102. L'ensemble mobile 120 est mobile en translation selon la direction de translation entre une position avancée (Fig. 2) et une position reculée (Fig. 5) et inversement. En position avancée, le coulisseau 122 est positionné le plus en avant possible de manière à ce que le capot mobile 124 soit rapproché du carter de soufflante 104 et du capot fixe 114. En position reculée, le coulisseau 122 est positionné le plus en arrière possible de manière à ce que le capot mobile 124 soit éloigné du carter de soufflante 104 et du capot fixe 114.

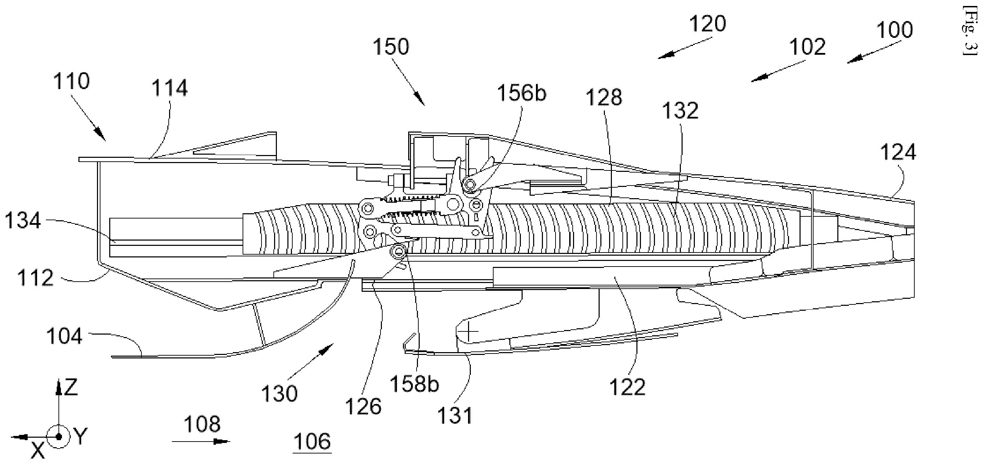

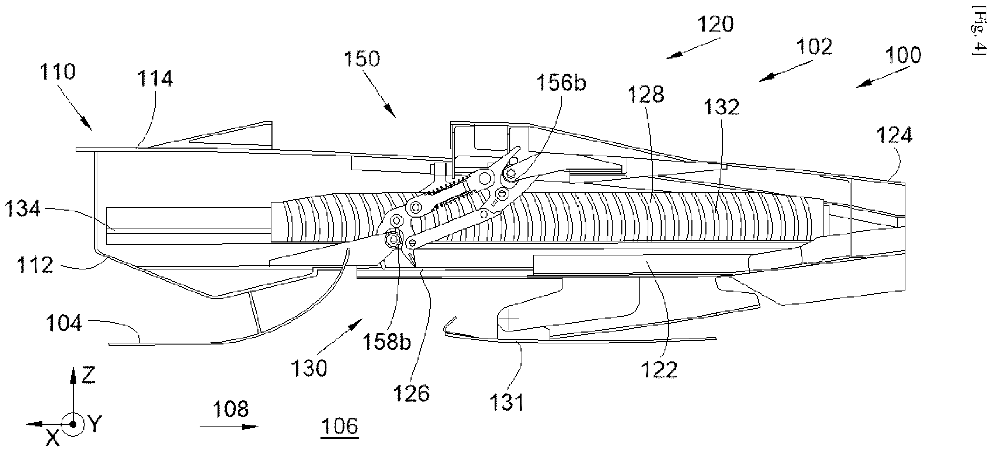

La Fig. 2 montre la position avancée et la Fig. 5 montre la position reculée et les Figs. 3 et 4 montrent deux positions intermédiaires successives.

En position avancée, le capot mobile 124 et le carter de soufflante 104 se prolongent de manière à définir la surface extérieure de la veine 106. De la même manière, le capot mobile 124 et le capot fixe 114 se prolongent de manière à définir la surface extérieure de la nacelle 102.

En position reculée, le capot mobile 124 et le carter de soufflante 104 sont à distance et, de la même manière, le capot mobile 124 et le capot fixe 114 sont à distance de sorte à définir entre eux une fenêtre 130 ouverte entre la veine 106 et l'extérieur de la nacelle 102. Ainsi, l'air du flux secondaire 108 traverse la fenêtre 130 pour rejoindre l'extérieur de la nacelle 102.

Le carter de soufflante 104 et le capot fixe 114 délimitent l'avant de la fenêtre 130 et le capot mobile 124 délimite l'arrière de la fenêtre 130.

Pour dévier le flux secondaire 108 vers la fenêtre 130, la nacelle 102 comporte une pluralité de volets inverseurs 131 et répartis dans la veine 106.

Chaque volet inverseur 131 prend une forme connue de l'homme du métier et n'est pas décrit plus avant car il ne fait pas partie de l'invention et chaque volet inverseur 131 est monté articulé sur l'ensemble mobile 120 entre une position déployée (Fig. 5) dans laquelle il obture en partie la veine 106 à l'arrière de la fenêtre 130 et une position escamotée (Fig. 2) dans laquelle il n'obture pas la veine 106 et inversement. Ainsi, en position déployée, les volets inverseurs 131 dévient le flux secondaire 108 vers la fenêtre 130 et l'extérieur.

Le coulisseau 122 est guidé par rapport à la structure fixe 110 par un premier système de guidage constitué ici d'un ensemble de glissières 126 qui sont fixées à la structure fixe 110, par exemple à une poutre 12 heures et à une poutre 6 heures de la structure fixe 110. Bien sûr, tout autre système de guidage est possible, comme par exemple un rail.

Le déplacement du coulisseau 122 le long de la structure fixe 110 est commandé par des actionneurs (non représentés) et commandé par une unité de contrôle, par exemple du type processeur, qui commande les déplacements dans un sens ou dans l'autre selon les besoins de l'aéronef 10. Chaque actionneur est ainsi prévu pour assurer, à partir de la position avancée, un déplacement en translation du coulisseau 122 selon la direction de translation jusqu'à la position reculée, et inversement. Il peut y avoir plusieurs actionneurs répartis angulairement autour de l'axe longitudinal X. Chaque actionneur est par exemple un vérin hydraulique qui comporte un cylindre solidaire de la structure fixe 110 et une tige mobile à l'intérieur du cylindre et solidaire du coulisseau 122.

La nacelle 102 comporte également des déflecteurs 132 (également appelés « cascades ») qui sont fixés par exemple à l'intérieur d'un cadre 128 qui est également mobile en translation selon la direction de translation entre une position avancée (Fig. 2) et une position reculée (Figs. 4 et 5) et inversement. Les déflecteurs 132, par exemple par l'intermédiaire du cadre 128, sont donc montés mobiles sur la structure fixe 110, également ici par exemple entre la poutre 12 heures et la poutre 6 heures.

Le cadre 128 est guidé par rapport à la structure fixe 110 par un deuxième système de guidage constitué ici d'un ensemble de glissières 134. Bien sûr, tout autre système de guidage est possible, comme par exemple un rail.

En position avancée, qui correspond à la position avancée de l'ensemble mobile 120, les déflecteurs 132 sont logés entre le carter de soufflante 104 et le capot fixe 114. En position reculée, les déflecteurs 132 sont positionnés en travers de la fenêtre 130 pour guider l'air du flux secondaire 108 vers l'extérieur.

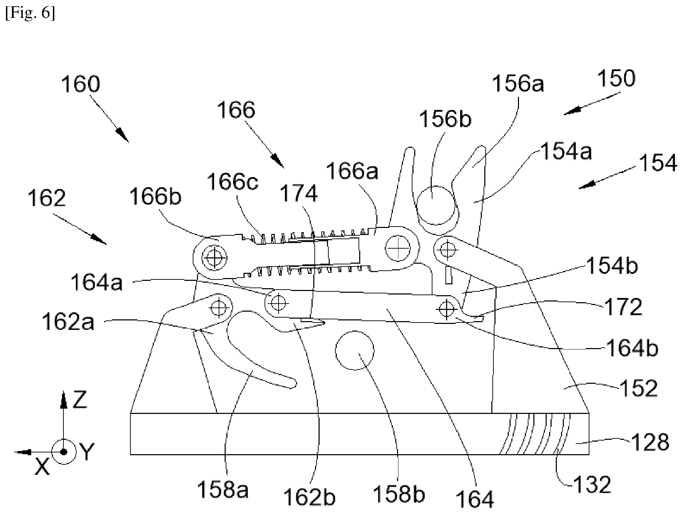

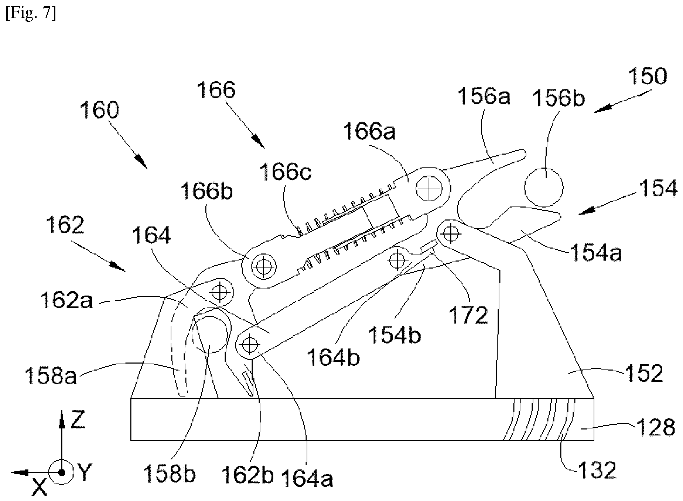

Le déplacement des déflecteurs 132 est assuré par au moins un système d'actionnement 150 représenté en détail sur les Figs. 6 et 7, respectivement dans une position rétractée correspondant à la position avancée et dans une position déployée correspondant à la position reculée. Dans le mode de réalisation de l'invention présenté ici, il y a un système d'actionnement 150 monté au niveau de la poutre 12 heures et un au niveau de la poutre 6 heures, mais un nombre différent et des localisations différentes sont possibles.

Le système d'actionnement 150 comporte un chariot 152 solidaire des déflecteurs 132, ici par l'intermédiaire du cadre 128 sur lequel le chariot 152 est fixé. Le chariot 152 se déplace donc en translation selon la direction de translation.

Le système d'actionnement 150 comporte également un levier de blocage 154 qui est monté articulé sur le chariot 152 et qui porte, ici au niveau d'une première extrémité 154a, des premiers moyens de blocage 156a qui sont prévus pour coopérer avec des deuxièmes moyens de blocage 156b solidaires de l'ensemble mobile 120.

Le levier de blocage 154 est mobile en rotation autour de son articulation entre une position de blocage (Fig. 6) dans laquelle les premiers moyens de blocage 156a sont solidaires des deuxièmes moyens de blocage 156b et une position libre (Fig. 7) dans laquelle les premiers moyens de blocage 156a ne sont pas solidaires des deuxièmes moyens de blocage 156b et inversement. En position de blocage, le chariot 152 est solidaire de l'ensemble mobile 120 et se déplace avec lui et en position libre, le chariot 152 n'est pas solidaire de l'ensemble mobile 120 et il est immobile tandis que l'ensemble mobile 120 peut se déplacer.

Dans le mode de réalisation de l'invention présenté sur les Figs. 6 et 7, les premiers moyens de blocage 156a prennent la forme d'une goulotte et les deuxièmes moyens de blocage 156b prennent la forme d'une tige qui se loge dans la goulotte en position de blocage. En position de blocage, l'ouverture de la goulotte est orientée perpendiculairement à la direction de translation et, en position libre, l'ouverture de la goulotte est orientée vers l'arrière parallèlement à la direction de translation.

Le système d'actionnement 150 comporte également un système de transmission 160 qui comporte des moyens pour déplacer le levier de blocage 154 de la position de blocage à la position libre lorsque l'ensemble mobile 120 atteint une position de basculement entre sa position avancée et sa position reculée en partant de sa position avancée, et inversement, le système de transmission 160 comporte des moyens pour déplacer le levier de blocage 154 de la position libre à la position de blocage lorsque l'ensemble mobile 120 atteint la position de basculement entre sa position reculée et sa position avancée en partant de sa position reculée. Ainsi, en partant de la position avancée de l'ensemble mobile 120 et des déflecteurs 132 (Fig. 2), l'ensemble mobile 120 se déplace vers l'arrière (Fig. 3) et entraîne en translation le levier de blocage 154 du fait de la solidarisation des premiers et deuxièmes moyens de blocage 156a-b, et donc également le chariot 152 et les déflecteurs 132 jusqu'à atteindre la position de basculement (Fig. 4) où le système de transmission 160 déplace le levier de blocage 154 de la position de blocage à la position libre, libérant ainsi les premiers et deuxièmes moyens de blocage 156a-b ce qui permet à l'ensemble mobile 120 de poursuivre son mouvement vers la position reculée (Fig. 5) tandis que le chariot 152 et les déflecteurs 132 restent en place, c'est-à-dire dans la position reculée des déflecteurs 132. La position de basculement correspond ainsi à la position reculée des déflecteurs 132 où ceux-ci sont en travers de la fenêtre 130, c'est-à-dire que lorsque l'ensemble mobile 120 est en position de basculement, les déflecteurs 132 sont en position reculée.

À l'inverse, en partant de la position reculée de l'ensemble mobile 120, celui-ci se déplace vers l'avant jusqu' à atteindre la position de basculement où les premiers et deuxièmes moyens de blocage 156a-b entrent en contact et où les deuxièmes moyens de blocage 156b poussent les premiers moyens de blocage 156 et ainsi déplacent le levier de blocage 154 de la position libre à la position de blocage, rendant solidaires l'ensemble mobile 120, le chariot 152 et les déflecteurs 132, et l'ensemble mobile 120 poursuit son mouvement vers la position avancée en entraînant le levier de blocage 154 et donc également le chariot 152 et les déflecteurs 132 vers la position avancée de l'ensemble mobile 120 et des déflecteurs 132.

Un tel arrangement permet ainsi de déplacer les déflecteurs 132 lors du déplacement de l'ensemble mobile 120 et de les ranger sous le capot fixe 114 en position avancée, réduisant ainsi l'encombrement au niveau du capot mobile 124.

Le système de transmission 160 comporte un levier d'arrêt 162 qui est monté articulé sur le chariot 152 et qui porte, ici au niveau d'une première extrémité 162a, des premiers moyens d'arrêt 158a qui sont prévus pour coopérer avec des deuxièmes moyens d'arrêt 158b solidaires de la structure fixe 110.

Le levier d'arrêt 162 est mobile en rotation autour de son articulation entre une position d'attente (Fig. 6) dans laquelle les premiers moyens d'arrêt 158a ne sont pas solidaires des deuxièmes moyens d'arrêt 158b et une position d'arrêt (Fig. 7) dans laquelle les premiers moyens d'arrêt 158a sont solidaires des deuxièmes moyens d'arrêt 158b et inversement. En position d'attente, le chariot 152 n'est pas solidaire de la structure fixe 110 et se déplace avec l'ensemble mobile 120 et, en position d'arrêt, le chariot 152 est solidaire de la structure fixe 110 et est immobile tandis que l'ensemble mobile 120 peut se déplacer.

Dans le mode de réalisation de l'invention présenté sur les Figs. 6 et 7, les premiers moyens d'arrêt 158a prennent la forme d'une goulotte et les deuxièmes moyens d'arrêt 158b prennent la forme d'une tige qui se loge dans la goulotte en position d'arrêt. En position d'arrêt, l'ouverture de la goulotte est orientée perpendiculairement à la direction de translation, et en position d'attente, l'ouverture de la goulotte est orientée vers l'arrière parallèlement à la direction de translation.

Le système de transmission 160 comporte un bras 164 avec une première extrémité 164a montée articulée avec une deuxième extrémité 162b du levier d'arrêt 162 et une deuxième extrémité 164b montée articulée avec une deuxième extrémité 154b du levier de blocage 154. Le bras 164 est agencé de manière à ce que le basculement de la position d'attente à la position d'arrêt du levier d'arrêt 162 corresponde au basculement de la position de blocage à la position libre du levier de blocage 154 et corresponde à la position de basculement et de manière à ce que le basculement de la position libre à la position de blocage du levier de blocage 154 corresponde au basculement de la position d'arrêt à la position d'attente du levier d'arrêt 162 et corresponde à la position de basculement.

Le système de transmission 160 comporte au moins un amortisseur 166. Pour chaque amortisseur 166, une première extrémité dudit amortisseur 166 est montée articulée au levier de blocage 154, ici au voisinage de la première extrémité 154a, et une deuxième extrémité est montée articulée au levier d'arrêt 162, ici au voisinage de la première extrémité 162a. L'amortisseur 166 est constitué ici d'un tube femelle 166a dont une extrémité proximale est montée articulée au levier de blocage 154 et constitue la première extrémité de l'amortisseur 166, et d'un tube mâle 166b dont une extrémité proximale est montée articulée au levier d'arrêt 162 et constitue la deuxième extrémité de l'amortisseur 166.

L'extrémité distale du tube mâle 166b est montée coulissante à l'intérieur de l'extrémité distale du tube femelle 166a.

Bien sûr, un montage inverse est également possible.

L'amortisseur 166 comporte également un ressort 166c, typiquement un ressort de compression, qui est monté comprimé entre le tube femelle 166a et le tube mâle 166b.

Lors du déplacement de l'ensemble mobile 120 de la position avancée à la position reculée sous l'action des actionneurs, les déflecteurs 132 et donc le chariot 152 sont entraînés de la position avancée à la position reculée qui correspond au passage de l'ensemble mobile 120 par la position de basculement. L'entraînement des déflecteurs 132 est dû au fait que le levier de blocage 154 est en position de blocage tandis que le levier d'arrêt 162 est en position d'attente.

Lorsque la position de basculement est atteinte, les deuxièmes moyens d'arrêt 158b rencontrent les premiers moyens d'arrêt 158a, entraînant ainsi le basculement du levier d'arrêt 162 vers la position d'arrêt et par action du bras 164, également le basculement du levier de blocage 154 de la position de blocage vers la position libre. Ce basculement entraîne la libération des deuxièmes moyens de blocage 156b, et l'ensemble mobile 120 continue son déplacement jusqu'à sa position reculée tandis que les déflecteurs 132 et le chariot 152 restent en place.

Pour limiter l'angle de basculement du levier de blocage 154 dans la position libre, ledit levier de blocage 154 vient en butée contre une première butée 172 du bras 164 qui empêche le levier de blocage 154 de pivoter trop loin.

À l'inverse, lors du déplacement de l'ensemble mobile 120 de la position reculée à la position avancée sous l'action des actionneurs, l'ensemble mobile 120 se déplace vers l'avant en passant par la position de basculement, tandis que le chariot 152 et les déflecteurs 132 restent immobiles.

Lorsque l'ensemble mobile 120 atteint la position de basculement, les deuxièmes moyens de blocage 156b rencontrent les premiers moyens de blocage 156a entraînant ainsi le basculement du levier de blocage 154 de la position libre vers la position de blocage et par action du bras 164, également le basculement du levier d'arrêt 162 de la position d'arrêt vers la position d'attente. Le chariot 152 et les déflecteurs 132 sont alors redevenus solidaires de l'ensemble mobile 120 et ils continuent à se déplacer vers l'avant avec lui jusqu'à la position avancée.

Pour limiter l'angle de basculement du levier d'arrêt 162 dans la position d'attente, ledit levier d'arrêt 162 vient en butée contre une deuxième butée 174 du bras 164 qui empêche le levier d'arrêt 162 de pivoter trop loin.

Pendant tous ces déplacements, chaque amortisseur 116 reste sous contrainte pour éviter les éventuels ballottements des différentes pièces du système d'actionnement 150. Un tel système d'actionnement 150 est en outre particulièrement peu encombrant et ne génère pas de chocs lors des déplacements.

Toutes les articulations sont ici des rotations dont les axes sont parallèles entre eux.

## Revendications

1. Turboréacteur double flux (100) comportant un moteur avec un carter de soufflante (104) et une nacelle (102) entourant le moteur où une veine (106) d'un flux secondaire (108) est délimitée entre la nacelle (102) et le moteur, ladite nacelle (102) comportant :
- une structure fixe (110) comportant un capot fixe (114) autour du carter de soufflante (104) et des deuxièmes moyens d'arrêt (158b),
- un ensemble mobile (120) qui est mobile en translation sur la structure fixe (110) et comporte des deuxièmes moyens de blocage (156b) et un coulisseau (122) portant un capot mobile (124), où l'ensemble mobile (120) est mobile entre une position avancée dans laquelle le coulisseau (122) est positionné de manière à ce que le capot mobile (124) soit rapproché du carter de soufflante (104) et du capot fixe (114) et une position reculée dans laquelle le coulisseau (122) est positionné de manière à ce que le capot mobile (124) soit éloigné du carter de soufflante (104) et du capot fixe (114) pour définir entre eux une fenêtre (130) ouverte entre la veine (106) et l'extérieur de la nacelle (102),
- des actionneurs prévus pour assurer, à partir de la position avancée, un déplacement en translation du coulisseau (122) jusqu'à la position reculée et inversement,
- des déflecteurs (132) montés mobiles en translation sur la structure fixe (110) entre une position avancée correspondant à la position avancée dans laquelle les déflecteurs (132) sont logés entre le carter de soufflante (104) et le capot fixe (114) et une position reculée dans laquelle les déflecteurs (132) sont positionnés en travers de la fenêtre (130), et
- au moins un système d'actionnement (150), chacun comportant :
- un chariot (152) solidaire des déflecteurs (132),
- un levier de blocage (154) monté articulé sur le chariot (152) et portant des premiers moyens de blocage (156a) où le levier de blocage (154) est mobile en rotation entre une position de blocage dans laquelle les premiers moyens de blocage (156a) sont solidaires des deuxièmes moyens de blocage (156b) et une position libre dans laquelle les premiers moyens de blocage (156a) ne sont pas solidaires des deuxièmes moyens de blocage (156b) et inversement, et
- un système de transmission (160) prévu, d'une part, pour déplacer le levier de blocage (154) de la position de blocage à la position libre lorsque l'ensemble mobile (120) atteint une position de basculement entre sa position avancée et sa position reculée en partant de sa position avancée, et, d'autre part, pour déplacer le levier de blocage (154) de la position libre à la position de blocage lorsque l'ensemble mobile (120) atteint la position de basculement entre sa position reculée et sa position avancée en partant de sa position reculée, où lorsque l'ensemble mobile (120) est en position de basculement, les déflecteurs (132) sont dans leur position reculée, où le système de transmission (160) comporte :
- un levier d'arrêt (162) monté articulé sur le chariot (152) et portant des premiers moyens d'arrêt (158a), où le levier d'arrêt (162) est mobile en rotation entre une position d'attente dans laquelle les premiers moyens d'arrêt (158a) ne sont pas solidaires des deuxièmes moyens d'arrêt (158b) et une position d'arrêt dans laquelle les premiers moyens d'arrêt (158a) sont solidaires des deuxièmes moyens d'arrêt (158b) et inversement, et
- un bras (164) avec une première extrémité (164a) montée articulée avec le levier d'arrêt (162) et une deuxième extrémité (164b) montée articulée avec le levier de blocage (154), où le bras (164) est agencé de manière à ce que le basculement de la position d'attente à la position d'arrêt du levier d'arrêt (162) corresponde au basculement de la position de blocage à la position libre du levier de blocage (154) et de manière à ce que le basculement de la position libre à la position de blocage du levier de blocage (154) corresponde au basculement de la position d'arrêt à la position d'attente du levier d'arrêt (162), où le système de transmission (160) comporte au moins un amortisseur (166) et où pour chaque amortisseur (166), une première extrémité dudit amortisseur (166) est montée articulée au levier de blocage (154) et une deuxième extrémité est montée articulée au levier d'arrêt (162).

2. Turboréacteur double flux (100) selon la revendication 1, **caractérisé en ce que**, dans la position libre, le levier de blocage (154) vient en butée contre une première butée (172) du bras (164).

3. Turboréacteur double flux (100) selon l'une des revendications 1 ou 2, **caractérisé en ce que**, dans la position d'attente, le levier d'arrêt (162) vient en butée contre une deuxième butée (174) du bras (164).

4. Aéronef (10) comportant au moins un turboréacteur double flux (100) selon l'une des revendications précédentes.

## Patentansprüche

1. Zweistrom-Turbofantriebwerk (100), umfassend einen Motor mit einem Gebläsegehäuse (104) und einer den Motor umgebenden Gondel (102), wobei zwischen der Gondel (102) und dem Motor ein Luftkanal (106) für einen Sekundärstrom (108) begrenzt ist, die Gondel (102) umfassend:
- eine feststehende Struktur (110), umfassend eine feststehende Haube (114) um das Gebläsegehäuse (104) und zweite Arretiermittel (158b),
- eine bewegliche Anordnung (120), die auf der feststehenden Struktur (110) versetzbar beweglich ist und zweite Arretiermittel (156b) und einen Schieber (122) umfasst, der eine bewegliche Haube (124) trägt, wobei die bewegliche Anordnung (120) zwischen einer vorderen Position, in der der Schieber (122) so positioniert ist, dass die bewegliche Haube (124) nahe an dem Gebläsegehäuse (104) und der feststehenden Haube (114) angeordnet ist, und einer hinteren Position beweglich ist, in der der Schieber (122) so positioniert ist, dass die bewegliche Haube (124) von dem Gebläsegehäuse (104) und der feststehenden Haube (114) entfernt ist, um zwischen sich ein Fenster (130) zu bilden, das zwischen dem Luftkanal (106) und der Außenseite der Gondel (102) offen ist,
- Betätigungsglieder, die vorgesehen sind, um aus der vorderen Position eine Versatzbewegung des Schiebers (122) in die hintere Position und umgekehrt zu gewährleisten,
- Deflektoren (132), die beweglich versetzbar an der feststehenden Struktur (110) zwischen einer vorderen Position befestigt sind, die der vorderen Position entspricht, in der die Deflektoren (132) zwischen dem Gebläsegehäuse (104) und der feststehenden Haube (114) angeordnet sind, und einer hinteren Position, in der die Deflektoren (132) quer zu dem Fenster (130) positioniert sind, und
- mindestens ein Betätigungssystem (150), jeweils umfassend:
- einen mit den Deflektoren (132) fest verbundenen Schlitten (152),
- einen an dem Schlitten (152) angelenkt befestigten Sperrhebel (154) und der erste Sperrmittel (156a) trägt, wobei der Sperrhebel (154) zwischen einer Sperrposition, in der die ersten Sperrmittel (156a) fest mit den zweiten Sperrmitteln (156b) verbunden sind, und einer Freigabeposition ist, in der die ersten Sperrmittel (156a) nicht fest mit den zweiten Sperrmitteln (156b) verbunden sind und umgekehrt, in der Rotation beweglich, und
- ein Übertragungssystem (160), das vorgesehen ist, zum einen, um den Sperrhebel (154) aus der Sperrposition in die Freigabeposition zu bewegen, wenn die bewegliche Anordnung (120) eine Umlegeposition zwischen ihrer vorderen und ihrer hinteren Position erreicht, ausgehend von ihrer vorderen Position, und zum anderen, um den Sperrhebel (154) aus der Freigabeposition in die Sperrposition zu bewegen, wenn die bewegliche Anordnung (120) die Umlegeposition zwischen ihrer hinteren Position und ihrer vorderen Position erreicht, ausgehend von ihrer hinteren Position, wobei, wenn sich die bewegliche Anordnung (120) in der Umlegeposition befindet, die Deflektoren (132) in ihrer hinteren Position sind, wobei das Übertragungssystem (160) umfasst:
- einen Arretierhebel (162), der an dem Schlitten (152) angelenkt befestigt ist und erste Arretiermittel (158a) trägt, wobei der Arretierhebel (162) zwischen einer Warteposition, in der die ersten Arretiermittel (158a) nicht fest mit den zweiten Arretiermitteln (158b) verbunden sind, und einer Arretierposition, in der die ersten Arretiermittel (158a) fest mit den zweiten Arretiermitteln (158b) verbunden sind und umgekehrt, in der Rotation beweglich ist, und
- einen Arm (164) mit einem ersten Ende (164a), das gelenkig an dem Arretierhebel (162) befestigt ist, und ein zweites Ende (164b), das gelenkig an dem Sperrhebel (154) befestigt ist, wobei der Arm (164) so angeordnet ist, dass das Umlegen aus der Warteposition in die Arretierposition des Arretierhebels (162) dem Umlegen der Sperrposition in die Freigabeposition des Sperrhebels (154) entspricht und so, dass das Umlegen der Freigabeposition in die Sperrposition des Sperrhebels (154) dem Umlegen der Arretierposition in die Warteposition des Arretierhebels (162) entspricht, wobei das Übertragungssystem (160) mindestens einen Dämpfer (166) umfasst und wobei bei jedem Dämpfer (166) ein erstes Ende des Dämpfers (166) gelenkig an dem Sperrhebel (154) und ein zweites Ende gelenkig an dem Arretierhebel (162) befestigt ist.

2. Zweistrom-Turbofantriebwerk (100) nach Anspruch 1, **dadurch gekennzeichnet, dass** in der freien Position der Sperrhebel (154) an einem ersten Anschlag (172) des Arms (164) anschlägt.

3. Zweistrom-Turbofantriebwerk (100) nach einem der Ansprüche 1 oder 2, **dadurch gekennzeichnet, dass** in der Warteposition der Arretierhebel (162) an einem zweiten Anschlag (174) des Arms (164) anschlägt.

4. Luftfahrzeug (10), welches mindestens ein Zweistrom-Turbofantriebwerk (100) nach einem der vorhergehenden Ansprüche umfasst.

## Claims

1. Turbofan (100) having a motor with a fan casing (104) and a nacelle (102) that surrounds the motor, wherein a duct (106) for a secondary flow (108) is delimited between the nacelle (102) and the motor, said nacelle (102) having:
- a fixed structure (110) having a fixed cowl (114) around the fan casing (104) and second stopping means (158b),
- a mobile assembly (120) that is able to move in translation on the fixed structure (110) and has second blocking means (156b) and a slider (122) bearing a mobile cowl (124), wherein the mobile assembly (120) is able to move between an advanced position in which the slider (122) is positioned such that the mobile cowl (124) is close to the fan casing (104) and the fixed cowl (114) and a withdrawn position in which the slider (122) is positioned such that the mobile cowl (124) is distanced from the fan casing (104) and the fixed cowl (114) so as to define between them a window (130) that is open between the duct (106) and the outside of the nacelle (102),
- actuators designed to move, from the advanced position, the slider (122) in translation to the withdrawn position and vice versa,
- deflectors (132) mounted so as to be able to move in translation on the fixed structure (110) between an advanced position corresponding to the advanced position in which the deflectors (132) are housed between the fan casing (104) and the fixed cowl (114) and a withdrawn position in which the deflectors (132) are positioned across the window (130), and
- at least one actuation system (150), each one having:
- a carriage (152) secured to the deflectors (132),
- a blocking lever (154) mounted articulated on the carriage (152) and bearing first blocking means (156a), wherein the blocking lever (154) is able to move in rotation between a blocking position in which the first blocking means (156a) are secured to the second blocking means (156b) and a free position in which the first blocking means (156a) are not secured to the second blocking means (156b) and vice versa, and
- a transmission system (160) designed, on the one hand, to move the blocking lever (154) from the blocking position to the free position when the mobile assembly (120) reaches a tilting position between its advanced position and its withdrawn position starting from its advanced position, and, on the other hand, to move the blocking lever (154) from the free position to the blocking position when the mobile assembly (120) reaches the tilting position between its withdrawn position and its advanced position starting from its withdrawn position, wherein, when the mobile assembly (120) is in the tilting position, the deflectors (132) are in their withdrawn position, and wherein the transmission system (160) has:
- a stopping lever (162) mounted articulated on the carriage (152) and bearing first stopping means (158a), wherein the stopping lever (162) is able to move in rotation between a standby position in which the first stopping means (158a) are not secured to the second stopping means (158b) and a stopping position in which the first stopping means (158a) are secured to the second stopping means (158b) and vice versa, and
- an arm (164) with a first end (164a) mounted articulated with the stopping lever (162) and a second end (164b) mounted articulated with the blocking lever (154), wherein the arm (164) is arranged such that the tilting of the stopping lever (162) from the standby position to the stopping position corresponds to the tilting of the blocking lever (154) from the blocking position to the free position and such that the tilting of the blocking lever (154) from the free position to the blocking position corresponds to the tilting of the stopping lever (162) from the stopping position to the standby position, wherein the transmission system (160) has at least one damper (166) and wherein, for each damper (166), a first end of said damper (166) is mounted articulated to the blocking lever (154) and a second end is mounted articulated to the stopping lever (162).

2. Turbofan (100) according to Claim 1, **characterized in that**, in the free position, the blocking lever (154) comes to abut against a first stop (172) of the arm (164).

3. Turbofan (100) according to one of the Claims 1 or 2, **characterized in that**, in the standby position, the stopping lever (162) comes to abut against a second stop (174) of the arm (164).

4. Aircraft (10) having at least one turbofan (100) according to one of the preceding claims.
